# EUROPÄISCHE PATENTANMELDUNG

(11) **EP 2 508 072 A2**
(43) Date of publication of application: **10.10.2012**
(21) Application number: 11185049.1
(22) Date of filing: 13.10.2011
(51) Int. Cl.: A01N 43/90, A01N 25/00, A01P 3/00

(54) **Use of dithiine-tetracarboximides for controlling phytopathogenic fungi on (flower) bulbs**

(30) Priority: 10.03.2011 EP 11157691
(71) Applicant: Bayer CropScience AG, 40789 Monheim (DE)
(72) Inventor: Meissner, Ruth, Dr., 51375 Leverkusen (DE); Adriaansen, Peter, Dr., 4641 BH Ossendrecht (NL); Tafforeau, Sylvain, 69004 Lyon (FR)

(57) **Abstract**

The present invention relates to the use of known dithiine-tetracarboximides for controlling phytopathogenic fungi on bulbs, and to methods of controlling phytopathogenic fungi on (flower) bulbs.

## Description

The present invention relates to the use of known dithiine-tetracarboximides for controlling phytopathogenic fungi on bulbs, and to methods of controlling phytopathogenic fungi on (flower) bulbs.

Dithiine-tetracarboximides per se are already known. It is also known that these dithiine-tetracarboximides can be used as anthelmintics against internal parasites of animals, in particular nematodes, and that they have insecticidal activity (cf. US 3,364,229). Furthermore, it is known that certain dithiine-tetracarboximides are antibacterially active and have a certain effect against mycosis in humans (cf. Il Farmaco, 2005, 60, 944-947). Moreover, it is known that dithiine-tetracarboximides can be employed as pigments in electrophotographic photoreceptors or as colorants in varnishes and polymers (cf. JP-A 10-251265, PL-B 143804). Additionally the fungicidal use of such dithiino-tetracarboximides is known (WO 2010/043319).

Bulb flowers are flowers that are propagated with bulb, sometimes including corms. Bulb flowers may be grown fro the production of cutflowers, pot plants or for bulb productions.

Since the ecological and economical demands made on modem fungicides keep getting more and more stringent, for example as regards the spectrum of action, toxicity, selectivity, application rate, formation of residues and advantageous production, and since furthermore for example resistance problems may occur, there is a constant need to develop novel fungicides which meet the abovementioned demands better, at least in some areas.

It has now been found that dithiine-tetracarboximides of the general formula (I) 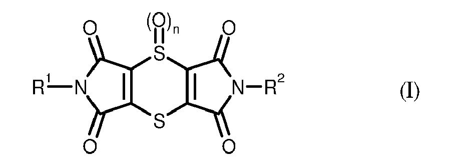 in which
- R¹ and R²: are identical or different and represent hydrogen, C₁-C₈-alkyl which is optionally monosubstituted or polysubstituted by halogen, -OR³, _COR⁴, or represent C₃-C₇-cycloalkyl which are optionally monosubstituted or polysubstituted by halogen, C₁-C₄-alkyl or C₁-C₄-haloalkyl, or represent aryl or aryl-(C₁-C₄-alkyl), each of which is optionally monosubstituted or polysubstituted by halogen, C₁-C₄-alkyl, C₁-C₄-haloalkyl, -COR⁴ or sulphonylamino,
- R³: represents hydrogen, C₁-C₄-alkyl, C₁-C₄-alkylcarbonyl, or represents aryl which is optionally monosubstituted or polysubstituted by halogen, C₁-C₄-alkyl or C₁-C₄-haloalkyl,
- R⁴: represents hydroxyl, C₁-C₄-alkyl or C₁-C₄-alkoxy,
- n: represents 0 or 1
are highly suitable for controlling phytopathogenic fungi on bulbs.

Dithiine-tetracarboximides of the formula (I) according to the invention and, if appropriate, their salts are highly suitable for controlling phytopathogenic harmful fungi. The abovementioned compounds according to the invention show mainly a fungicidal activity and can be used not only in plant protection, in the domestic and hygiene fields, but also in the protection of materials.

Formula (I) provides a general definition of the dithiine-tetracarboximides which can be used in accordance with the invention. Carboximides of the formula (I) in which the radicals have the meanings hereinbelow can preferably be used.
- R¹ and R²: are preferably identical or different and preferably represent hydrogen, or represent C₁-C₆-alkyl which is optionally monosubstituted or polysubstituted by fluorine, chlorine, bromine, -OR³, -COR⁴, or represent C₃-C₇-cycloalkyl which is optionally monosubstituted or polysubstituted by chlorine, methyl or trifluoromethyl, or represent phenyl or phenyl-(C₁-C₄-alkyl), each of which is optionally monosubstituted or polysubstituted by fluorine, chlorine, bromine, methyl, trifluoromethyl, -COR⁴, sulphonylamino.
- R¹ and R²: are especially preferably identical or different and especially preferably represent hydrogen, or represent C₁-C₄-alkyl which is optionally monosubstituted or polysubstituted by fluorine, chlorine, hydroxyl, methoxy, ethoxy, methylcarbonyloxy, carboxyl, or represent C₃-C₇-cycloalkyl which is optionally monosubstituted or polysubstituted by chlorine, methyl or trifluoromethyl, or represent phenyl, benzyl, 1-phenethyl, 2-phenethyl or 2-methyl-2-phenethyl, each of which is optionally monosubstituted to trisubstituted by fluorine, chlorine, bromine, methyl, trifluoromethyl, -COR⁴, sulphonylamino.
- R¹ and R²: are very especially preferably identical or different and very especially preferably represent hydrogen, methyl, ethyl, n-propyl, isopropyl, 2,2-difluoroethyl, 2,2,2-trifluoroethyl, or represent cyclopropyl or cyclohexyl, each of which is optionally substituted by chlorine, methyl or trifluoromethyl.
- R¹ and R²: particularly preferably simultaneously represent methyl.
- R ³: preferably represents hydrogen, methyl, ethyl, methylcarbonyl, ethylcarbonyl or represents phenyl which is optionally monosubstituted or polysubstituted by fluorine, chlorine, methyl, ethyl, n-propyl, isopropyl or trifluoromethyl.
- R³: especially preferably represents hydrogen, methyl, methylcarbonyl or phenyl.
- R⁴: preferably represents hydroxyl, methyl, ethyl, methoxy or ethoxy.
- R⁴: especially preferably represents hydroxyl or methoxy.
- n: preferably represents 0.
- n: preferably also represents 1.
- n: especially preferably represents 0.

The following compounds may be mentioned individually:
(I-1) 2,6-dimethyl-1H,5H-[1,4]dithiino[2,3-c:5,6-c']dipyrrole-1,3,5,7(2H,6H)-tetrone (i.e. R¹ = R² = methyl, n = 0)
(1-2) 2,6-diethyl-1H,5H-[1,4]dithiino[2,3-c:5,6-c']dipyrrole-1,3,5,7(2H,6H)-tetrone (i.e. R¹ = R² = ethyl, n = 0)
(I-3) 2,6-dipropyl-1H,5H-[1,4]dithiino[2,3-c:5,6-c']dipyrrole-1,3,5,7(2H,6H)-tetrone (i.e. R¹ = R² = propyl, n=0)
(I-4) 2,6-diisopropyl-1H,5H-[1,4]dithiino[2,3-c:5,6-c']dipyrrole-1,3,5,7(2H,6H)-tetrone (i.e. R¹ = R² = isopropyl, n = 0)
(I-5) 2,6-dimethyl-1H,5H-[1,4]dithiino[2,3-c:5,6-c']dipyrrole-1,3,5,7(2H,6H)-tetrone 4-oxide (i.e. R¹ = R² = methyl, n = 1)

Compounds (I-1), (I-2) and (I-3) can be used with special preference, in particular compound (I-1).

Depending on the nature of the above-defined substituents, the compounds of the formula (I) can have acidic or basic properties and can form salts, if appropriate also internal salts, or adducts with inorganic or organic acids or with bases or with metal ions.

Suitable metal ions are, in particular, the ions of the elements of the second main group, in particular calcium and magnesium, of the third and fourth main group, in particular aluminium, tin and lead, and of the first to eighth subgroup, in particular chromium, manganese, iron, cobalt, nickel, copper, zinc and others. Especially preferred are the metal ions of the elements of the fourth period. In this context, the metals can be present in the various valencies which they can assume.

If the compounds of the formula (I) have attached to them hydroxyl, carboxyl or other groups which induce acidic properties, these compounds can be reacted with bases to give salts.

Examples of suitable bases are hydroxides, carbonates, hydrogencarbonates of the alkali and alkaline earth metals, in particular those of sodium, potassium, magnesium and calcium, furthermore ammonia, primary, secondary and tertiary amines with (C₁-C₄-)-alkyl radicals, mono-, di- and trialkanolamines of (C₁-C₄)-alkanols, choline and chlorocholine.

If the compounds of the formula (I) have amino, alkylamino or other groups which induce basic properties attached to them, then these compounds can be reacted with acids to give salts.

Examples of inorganic acids are hydrohalic acids such as hydrofluoric acid, hydrochloric acid, hydrobromic acid and hydriodic acid, sulphuric acid, phosphoric acid and nitric acid, and acidic salts such as NaHSO₄ and KHSO₄.

Organic acids are, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, alkylsulphonic acids (sulphonic acids with straight-chain or branched alkyl radicals having 1 to 20 carbon atoms), arylsulphonic acids or -disulphonic acids (aromatic radicals, such as phenyl and naphthyl, which have one or two sulphonyl groups attached to them), alkylphosphonic acids (phosphonic acids with straight-chain or branched alkyl radicals having 1 to 20 carbon atoms), arylphosphonic acids or aryldiphosphonic acids (aromatic radicals, such as phenyl and naphthyl, which have one or two phosphonic acid radicals attached to them), it being possible for the alkyl or aryl radicals to have attached to them further substituents, for example p-toluenesulphonic acid, salicylic acid, p-aminosalicylic acid, 2-phenoxybenzoic acid, 2-acetoxybenzoic acid etc.

The salts which can thus be obtained also have fungicidal properties.

The dithiine-tetracarboximides of the formula (I) which can be used in accordance with the invention can be prepared in a known manner (cf. US 3,364,229, Synthetic Commun. 2006, 36, 3591-3597 and Il Farmaco 2005, 60, 944-947, WO 2010/043319).

Furthermore, the invention relates to a method of controlling undesired microorganisms on (flower) bulbs, characterized in that dithiine-tetracarboximides of the formula (I) are applied in accordance with the invention to the bulbs.

The dithiine-tetracarboximides of the formula (I) are applied to the bulbs in form of fungicidal plant protection compositions for controlling undesired fungi, which compositions comprise at least one dithiine-tetracarboximide of the formula (I) and agriculturally useable adjuvants, solvents, carriers, surface-active substances or extenders.

According to the invention, carrier is to be understood as meaning a natural or synthetic, organic or inorganic substance which is mixed or combined with the active substances for better applicability, in particular for application to plants or plant parts or seeds. The carrier, which may be solid or liquid, is generally inert and should be suitable for use in agriculture.

Suitable solid or liquid carriers are: for example ammonium salts and ground natural minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilisers, water, alcohols, especially butanol, organic solvents, mineral and vegetable oils and derivatives of these. Mixtures of such carriers may also be used. Suitable carriers for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks.

Suitable liquefied gaseous extenders or carriers are liquids which are gaseous at ambient temperture and under atmospheric pressure, for example aerosol propellants, such as halocarbons, and also butane, propane, nitrogen and carbon dioxide.

Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils.

If the extender used is water, it is also possible, for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulphoxide, and also water.

The compositions used according to the invention may comprise additional further components, such as, for example, surface-active substances. Suitable surface-active substances are emulsifiers and/or foam formers, dispersants or wetting agents having ionic or nonionic properties, or mixtures of these surface-active substances. Examples of these are salts of polyacrylic acid, salts of lignosulphonic acid, salts of phenolsulphonic acid or naphthalenesulphonic acid, polycondensates of ethylene oxide with fatty alcohols or with fatty acids or with fatty amines, substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates, for example, alkylaryl polyglycol ethers, alkylsulphonates, alkyl sulphates, arylsulphonates, protein hydrolysates, lignin-sulphite waste liquors and methylcellulose. The presence of a surface-active substance is required if one of the active substances and/or one of the inert carriers is insoluble in water and when the application takes place in water. The proportion of surface-active substances is between 5 and 40 per cent by weight of the composition according to the invention.

It is possible to use colorants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc.

If appropriate, other additional components may also be present, for example protective colloids, binders, adhesives, thickeners, thixotropic substances, penetrants, stabilizers, sequestring agents, complex formers. In general, the active substances can be combined with any solid or liquid additive customarily used for formulation purposes.

In general, the formulations contain between 0.05 and 99% by weight, 0.01 and 98% by weight, preferably between 0.1 and 95% by weight, especially preferably between 0.5 and 90% by weight of active substance, very especially preferably between 10 and 70 per cent by weight.

The active substances or compositions according to the invention can be used as such or, depending on their respective physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspension concentrates, suspoemulsion concentrates, soluble concentrates, suspensions, wettable powders, soluble powders, dusts and granules, water-soluble granules or tablets, water-soluble powders for the treatment of seed, wettable powders, natural products and synthetic substances impregnated with active substance, and also microencapsulations in polymeric substances and in coating materials for seed, and also ULV cold-fogging and warm-fogging formulations.

The formulations mentioned can be prepared in a manner known per se, for example by mixing the active substances with at least one customary extender, solvent or diluent, emulsifier, dispersant and/or binder or fixing agent, wetting agent, water repellant, if appropriate siccatives and UV stabilizers and, if appropriate, dyes and pigments, defoamers, preservatives, secondary thickeners, adhesives, gibberellins and also further processing auxiliaries.

The compositions used according to the invention do not only comprise ready-to-use compositions which can be applied with suitable apparatus to the plant or the seed, but also commercial concentrates which have to be diluted with water prior to use.

The active substances according to the invention, per se or in their (commercially available) formulations and in the use forms prepared from these formulations, may be present in a mixture with other (known) active substances such as insecticides, attractants, sterilants, bactericides, acaricides, nematicides, fungicides, growth regulators, herbicides, fertilisers, safeners, biological control agents or semiochemicals.

The treatment according to the invention of the bulbs is carried out directly or by action on their surroundings, habitat or storage space using customary treatment methods, for example by dipping, spraying, atomizing, irrigating, evaporating, dusting, fogging, broadcasting, foaming, painting, spreading-on, drenching, drip irrigating and, in the case of propagation material, in particular in the case of seeds, furthermore by dry seed treatment, by wet seed treatment, by slurry treatment, by incrusting, by coating with one or more coats, etc. It is furthermore possible to apply the active substances by the ultra-low-volume method, or to inject the active substance preparation, or the active substance itself, into the soil. Particularly, bulbs are treated by dipping, spraying, showering, dust application and soil treatment, e.g. by in-furrow application at the time of sowing.

The invention furthermore comprises a method for the treatment of seed, knowing the the bulbs are considered as seeds.

The invention furthermore relates to bulbs which have been treated in accordance with one of the methods described in the previous paragraph. The bulbs according to the invention are used in methods for the protection against undesirable fungi. Here, a bulb treated with at least one active substance according to the invention is used.

The active substances or compositions according to the invention are also suitable for treating bulbs. A large part of the damage to crop plants caused by harmful organisms is triggered by the infection of the bulb during storage or after sowing as well as during and after germination of the plant. This phase is particularly critical since the roots and shoots of the growing plant are particularly sensitive, and even just small damage may result in the death of the plant. Accordingly, there is great interest in protecting the seed and the germinating plant by using appropriate compositions.

The control of phytopathogenic fungi by treating the bulbs of plants has been known for a long time and is the subject of continuous improvements. However, the treatment of bulbs entails a series of problems which cannot always be solved in a satisfactory manner. Thus, it is desirable to develop methods for protecting the bulbs and the germinating plant which dispense with the additional application of plant protection compositions after sowing or after the emergence of the plants or which at least considerably reduce additional application. It is furthermore desirable to optimize the amount of active substance employed in such a way as to provide maximum protection for the bulbs and the germinating plant from attack by phytopathogenic fungi, but without damaging the plant itself by the active substance employed. In particular, methods for the treatment of bulbs should also take into consideration the intrinsic fungicidal properties of transgenic plants in order to achieve optimum protection of the bulbs and the germinating plant with a minimum of plant protection compositions being employed.

One of the advantages of the present invention is that, because of the properties of the active substances or compositions according to the invention, treatment of the bulbs with these active substances or compositions not only protects the bulbs themselves, but also the resulting plants after emergence, from phytopathogenic fungi. In this manner, the immediate treatment of the crop at the time of sowing or shortly thereafter can be dispensed with.

It is also considered to be advantageous that the active substances or compositions according to the invention can be used in particular also for transgenic bulbs where the plant growing from these bulbs is capable of expressing a protein which acts against pests. By treating such bulbs with the active substances or compositions according to the invention, even by the expression of the, for example, insecticidal protein, certain pests may be controlled. Surprisingly, a further synergistic effect may be observed here, which additionally increases the effectiveness of the protection against attack by pests.

The compositions according to the invention are suitable for protecting bulbs of any bulb forming plant variety employed in agriculture, in the greenhouse, in forests or in horticulture and viticulture. In particular, this takes the form of bulbs of cutflowers (e.g. lily, tulip, crocus, anemone, cyclamen, hyacinth, amaryllis, hippeastrum, narcissus, iris), vegetables (e.g. onions, shallots, leeks, scallions) and herbs (e.g. garlic, chives).

As also described hereinbelow, the treatment of transgenic bulbs with the active substances or compositions according to the invention is of particular importance. This refers to the bulbs of plants containing at least one heterologous gene which allows the expression of a polypeptide or protein having insecticidal properties. The heterologous gene in transgenic bulbs can originate, for example, from microorganisms of the species *Bacillus, Rhizobium, Pseudomonas, Serratia, Trichoderma, Clavibacter, Glomus* or *Gliocladium.* Preferably, this heterologous gene is from *Bacillus sp.,* the gene product having activity against the European corn borer and/or the Western corn rootworm. Particularly preferably, the heterologous gene originates from *Bacillus thuringiensis.*

In the context of the present invention, the composition according to the invention is applied on its own or in a suitable formulation to the bulbs. Preferably, the bulbs are treated in a state in which it is sufficiently stable so that the treatment does not cause any damage. In general, treatment of the bulbs may take place at any point in time between harvesting and sowing. Usually, the bulbs used have been separated from the plant and freed from cobs, shells, stalks, coats, hairs or the flesh of the fruits. Thus, it is possible to use, for example, bulbs which have been harvested, cleaned and dried to a moisture content of less than 15% by weight. Alternatively, it is also possible to use bulbs which, after drying, have been treated, for example, with water and then dried again.

When treating the bulbs, care must generally be taken that the amount of the composition according to the invention applied to the seed and/or the amount of further additives is chosen in such a way that the germination of the bulbs are not adversely affected, or that the resulting plant is not damaged. This must be borne in mind in particular in the case of active substances which may have phytotoxic effects at certain application rates.

The compositions according to the invention can be applied directly, that is to say without comprising further components and without having been diluted. In general, it is preferable to apply the compositions to the bulbs in the form of a suitable formulation. Suitable formulations and methods for the treatment of seed are known to the person skilled in the art and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

The active substances which can be used according to the invention can be converted into the customary seed-dressing product formulations such as solutions, emulsions, suspensions, powders, foams, slurries and other coating compositions for seed, and ULV formulations.

These formulations are prepared in the known manner by mixing the active substances with customary additives such as, for example, customary extenders and also solvents or diluents, colorants, wetters, dispersants, emulsifiers, antifoams, preservatives, secondary thickeners, adhesives, gibberellins, and also water.

Colorants which may be present in the seed-dressing product formulations which can be used according to the invention are all colorants which are customary for such purposes. Both pigments, which are sparingly soluble in water, and dyes, which are soluble in water, may be used. Examples of colorants which may be mentioned are those known by the names Rhodamin B, C.I. Pigment Red 112 and C.I. Solvent Red 1. Wetters which may be present in the seed-dressing product formulations which can be used according to the invention are all substances which are conventionally used for the formulation of agrochemical active substances and for promoting wetting. Alkylnaphthalenesulphonates, such as diisopropyl- or diisobutylnaphthalenesulphonates, can preferably be used.

Suitable dispersants and/or emulsifiers which may be present in the seed-dressing product formulations which can be used in accordance with the invention are all non-ionic, anionic and cationic dispersants which are conventionally used for the formulation of agrochemical active substances. Non-ionic or anionic dispersants or mixtures of non-ionic or anionic dispersants can preferably be used. Suitable non-ionic dispersants which may be mentioned are, in particular, ethylene oxide/propylene oxide block polymers, alkylphenol polyglycol ethers and tristryrylphenol polyglycol ethers, and their phosphated or sulphated derivatives. Suitable anionic dispersants are, in particular, lignosulphonates, polyacrylic acid salts and arylsulphonate/formaldehyde condensates.

Antifoams which may be present in the seed-dressing product formulations which can be used according to the invention are all foam-suppressing substances conventionally used for the formulation of agrochemical active substances. Silicone antifoams and magnesium stearate can preferably be used.

Preservatives which may be present in the seed-dressing product formulations which can be used according to the invention are all substances which can be employed in agrochemical compositions for such purposes. Examples which may be mentioned are dichlorophene and benzyl alcohol hemiformal.

Secondary thickeners which may be present in the seed-dressing product formulations which can be used according to the invention are all substances which can be employed in agrochemical compositions for such purposes. Cellulose derivatives, acrylic acid derivatives, xanthan, modified clays and highly disperse silica are preferably suitable.

Adhesives which may be present in the seed-dressing product formulations which can be used according to the invention are all customary binders which can be employed in seed-dressing products. Polyvinylpyrrolidone, polyvinyl acetate, polyvinyl alcohol and tylose may be mentioned by preference.

Gibberellins which may be present in the seed-dressing product formulations which can be used according to the invention are preferably the gibberellins A1, A3 (= gibberellic acid), A4 and A7, with gibberellic acid being particularly preferably used. The gibberellins are known (cf. R. Wegler "Chemie der Pflanzenschutz- und Schädlingsbekämpfungsmittel" [Chemistry of Plant Protectants and Pesticides], Vol. 2, Springer Verlag, 1970, pp. 401-412).

The seed-dressing product formulations which can be used in accordance with the invention can be employed either directly or after previous dilution with water for the treatment of a wide range of seeds, including the seed of transgenic plants. In this context, additional synergistic effects may also occur as a consequence of the interaction with the substances formed by expression.

Suitable apparatuses which can be employed for treating bulbs with the seed-dressing product formulations which can be used in accordance with the invention, or with the preparations prepared therefrom by addition of water, are all mixing apparatuses which can usually be employed for dressing seed. Specifically, a seed-dressing procedure is followed in which the seed is placed in a mixer, the amount of seed-dressing product formulation desired in each case is added, either as such or after previously diluting it with water, and the contents of the mixer are mixed until the formulation has been distributed uniformly on the seed. If appropriate, this is followed by a drying process.

The active substances or compositions according to the invention have a potent fungicidal activity and can be employed for controlling undesired fungi in plant protection and in horticulture.

The dithiine-tetracarboximides according to the invention can be applied in plant protection for controlling Plasmodiophoromycetes, Oomycetes, Chytridiomycetes, Zygomycetes, Ascomycetes, Basidiomycetes and Deuteromycetes.

The fungicidal compositions according to the invention can be employed curatively or protectively for controlling phytopathogenic fungi. The invention therefore also relates to curative and protective methods of controlling phytopathogenic fungi by using the active substances or compositions according to the invention, which are applied to the seed, the plant or plant parts, the fruits or the soil in which the plants grow.

The compositions according to the invention for controlling phytopathogenic fungi in plant protection comprise an effective, but nonphytotoxic amount of the active substances according to the invention. "Effective, but nonphytotoxic amount" means such an amount of the composition according to the invention which suffices for sufficiently controlling or fully eradicating the fungal disease of the plant while simultaneously not entailing substantial phytotoxicity symptoms. In general, this application rate can vary within a substantial range. It depends on a plurality of factors, for example on the fungus to be controlled, the plant, the climatic conditions and the constituents of the compositions according to the invention.

The good plant tolerance of the active substances at the concentrations required for controlling plant diseases permits the treatment of aerial plant parts, of rigiditive propagation material and of seed, and of the soil.

Bulbs of plants which can be treated in accordance with the invention and which may be mentioned are the following: *Alliacecae sp., Liliaceae sp., Amaryllicaceae sp., Iridaceae sp., Hermodactyloides.*

In particular bulbs of the following plants (cf. http://www.bhg.com/gardening/plant-dictionary/bulb/) may be treated according to the present invention:
*Allium* spp., e.g. *Allium cepa, Allium oschaninii, Allium ampeloprasum, Allium ascalonicum, Allium aflatunense, Allium carinatum pulchellum, Allium sativum, Allium scordoprasum, Allium schoenoprasum, Allium porrum, Allium cyathophorum var. farreri, Allium oreophilum, Allium schubertii, Allium senescens subsp. montanum var. glaucum, Allium stipitatum, Allium triquetrum, Allium ursinum, Allium caeruleum, Allium sphaerocephalon, Allium giganteum, Allium fistulosum, Allium altaicum, Allium ceratophyllum, Allium* 'Globemaster', *Allium moly, Allium* 'Hair', *Allium karativiense 'Ivory Queen', Allium* 'Millenium', *Allium* 'Mount Everest', *Allium neapolitanum, Allium cernuum, Allium aflatunense, Allium rosenbachianum, Allium* 'Silver Spring', *Allium cristophii, Allium tanguticum* 'Summer Beauty', *Allium tanguticum* 'Summer Skies', *Allium karataviense, Allium giganteum* 'Album', *Allium abramsii, Allium acuminatum, Allium aflatunense, Allium amplectens, Allium atrorubens, Allium bolanderi, Allium burlewii, Allium caeruleum, Allium ccunpcmulatum, Allium cernuum, Allium cratericola, Allium crispum, Allium cristophii, Allium monanthum, Allium platycaule, Allium praecox, Allium punctum, Allium sanbornii, Allium shevockii, Allium siskiyouense, Allium sphcaerocephalon, Allium textile, Allium tribracteatum, Allium tricoccum, Allium triquetrum, Allium tuolumnense, Allium unifolium, Allium validum, Allium yosemitense, Allium stellatum, Allium canadense, Allium drummondii, Allium moly, Allium neapolitanum, Allium nigrum, Allium roseum, Allium sphaerocephalon, Allium triquetrum, Allium vineale;*
*Alocasia* spp., e.g. *Alocasia amazonica, Alocasia macrorrhiza;*
*Alstroemeria* spp., e.g. *Alstroemeria aurea, Alstroemeria ligtu;*
*Anemone* spp., e.g. *Anemone bland, Anemone bland* 'White Splendour', *Anemone coronaria* 'Mr. Fokker'; *Arisaema* spp., e.g. *Arisaema sikokianum, Arisaema triphyllum;*
*Begonia* x tuberhybrida, e.g. *Begonia* 'Go Go Yellow', *Begonia* 'Nonstop Bright Rose', *Begonia* 'Nonstop Deep Red', *Begonia* 'Nonstop Deep Rose', *Begonia* 'Nonstop Fire', *Begonia* 'Nonstop Mocca White', *Begonia* 'Nonstop Mocca Deep Orange', *Begonia* 'Nonstop Rose Petticoat', *Begonia* 'Nonstop Yellow', *Begonia* 'Scentimental Blush', *Begonia* 'Solenia Cherry';
*Belamcanda chinensis;*
*Bletilla striata;*
*Caladium* spp., e.g. *Caladium* 'Florida Cardinal', *Caladium* 'Florida Elise', *Caladium* 'Florida Red Ruffles', *Caladium* 'Gingerland', *Caladium* 'Marie Moir', *Caladium* 'Miss Muffet', *Caladium* 'Red Flash', *Caladium* 'White Queen';
*Camassia* spp., e.g. *Camassia leichtlinii* 'Caerulea', *Camassia* 'Blue Danube', *Camassia cusickii, Camassia quamash;*
*Canna* spp., e.g. *Canna* 'Australia', *Canna* 'Cleopatra', *Canna* 'Lucifer', *Canna* 'Pretoria', *Canna* 'Tropical Rose', *Canna* 'Phasion', *Canna* 'Wyoming';
*Chionodoxa* spp., e.g. *Chionodoxa lucilae, Chionodoxa lucilae* 'Pink Giant';
*Colchicum* spp., e.g. *Colchicum bornmuelleri, Colchicum giganteum, Colchicum autumnale* 'Alboplenum', *Colchicum* 'Giant', *Colchicum* 'Waterlily';
*Colocasia* spp., e.g *Colocasia esculenta, Colocasia esculenta* 'Black Magic', *Colocasia esculenta* 'Illustris'; *Convallaria majus;*
*Corydalis* spp., e.g., *Corydalis* 'Berry Exciting', *Corydalis* 'Blackberry Wine', *Corydalis elata, Corydalis flexuosa* 'Blue Panda', *Corydalis* 'Canary Feathers', *Corydalis flexuosa* 'China Blue', *Corydalis ochroleuca, Corydalis solida, Corydalis flexuosa* 'Purple Leaf , *Corydalis lutea, Corydalis solida* 'Snowstorm';
*Crinum* spp., e.g. *Crinum americanum, Crinum asiaticum;*
*Crocosmia* spp., e.g. *Crocosmia* 'Lucifer', *Crocosmia* 'Meterore';
*Crocus* spp., e.g. *Crocus sieberi* 'Bowles White', *Crocus speciosus, Crocus sieberi* 'Firefly', *Crocus vernus* 'Flower Record', *Crocus vernus* 'Jeanne d'Arc', *Crocus tommasinianus* 'Lilac Beauty', *Crocus vernus* 'Pickwick', *Crocus sieberi f. tricolor, Crocus vernus* 'Yellow Mammoth';
*Dahlia* spp., e.g. *Dahlia* 'Arabian Night', *Dahlia* 'Bishop of Llandaff', *Dahlia* 'Chinese Lantern', *Dahlia* 'Duet', *Dahlia* 'Envy', *Dahlia* 'Jessica', *Dahlia* 'Pam Howden', *Dahlia* 'Penn's Gift', *Dahlia* 'Radar', *Dahlia* 'SB's Sunny', *Dahlia* 'Sharon Ann', *Dahlia* Star Gazer Series, *Dahlia* 'Suffolk Punch', *Dahlia* 'Survivor', *Dahlia* 'Victory Dwarf', *Dahlia* 'White Fawn';
*Dietes iridioides;*
*Eranthis hyemalis;*
*Erythronium* spp., e.g. *Erythronium americanum, Erythronium dens-canis* 'Purple King', *Erythronium* 'Pagoda';
*Eucomis* spp., e.g. *Eucomis* 'Sparkling Burgundy';
*Freesia* spp.;
*Fritillaria* spp., e.g. *Fritillaria imperialis, Fritillaria imperialis* 'Aureomarginata', *Fritillaria imperialis* 'Lutea', *Fritillaria meleagris, Fritillaria meleagris alba, Fritillaria michailovskyi, Fritillaria pallidiflora,*
*Fritillaria persica;*
*Galanthus* spp., e.g. *Galanthus nivalis* 'Flore Pleno', *Galanthus nivalis;*
*Gladiolus* spp., e.g. *Gladiolus callianthus var. murielae;*
*Gloriosa superba;*
*Hippeastrum* hybrids, e.g. *Hippeastrum* 'Benfica', *Hippeastrum* 'Chico', *Hippeastrum* 'Ludwig Dazzler', *Hippeastrum* 'Novella', *Hippeastrum* 'Nymph', *Hippeastrum* 'Picotee', *Hippecastrum* 'Popov', *Hippeastrum* 'Santos';
*Hyacinthoides hispanica;*
*Hyacinthus* spp., e.g. *Hyacinthus orientalis* 'Carnegie', *Hyacinthus orientalis* 'China Pink', *Hyacinthus orientalis* 'City of Haarlem', *Hyacinthus orientalis* 'Hollyhock', *Hycacinthus orientalis* 'Peter Stuyvesant', *Hyacinthus orientalis* 'Sky Jacket', *Hyacinthus orientalis* 'Woodstock';
*Leucojum aestivum;*
*Lilium* spp., e.g., *Lilium* 'Catherine Laburi', *Lilium* 'Centerfold', *Lilium* 'Connecticut King', *Lilium* 'Dani Arifin', *Lilium* 'Enchantment', *Lilium* 'King Pete', *Lilium pumilum, Lilium speciosum, Lilium speciosum var. album, Lilium martagon, Lilium* 'Montreaux', *Lilium* 'Muscadet', *Lilium* 'Nove Cento', *Lilium* 'Purple Rain', *Lilium* 'Satin Slippers', *Lilium* 'Star Gazer', *Lilium x lancifolium, Lilium* 'Vivaldi', *Lilium distichum, Lilium hansonii, Lilium medeoloides, Lilium tsingtauense, Lilium debile, Lilium bolanderi, Lilium columbianum, Lilium humboldtii, Lilium kelloggii, Lilium rubescens, Lilium washingtonianum, Lilium kelleyanum, Lilium maritimum, Lilium occidentale, Lilium pardalinum, Lilium parryi, Lilium parvum, Lilium canadense, Lilium puberulum, Lilium grayi, Lilium iridollae, Lilium michiganense, Lilium michauxii, Lilium pyrophilum, Lilium superbum, Lilium catesbaei, Lilium philadelphicum, Lilium bulbiferum, Lilium candidum, Lilium chalcedonicum, Lilium kesselringianum, Lilium ledebourii, Lilium szovitsianum, Lilium moncadelphum, Lilium pyrenaicum, Lilium rhodopeum, Lilium cakkusicmum, Lilium bosnicacum, Lilium carniolicum, Lilium ciliatum, Lilium pomponium, Lilium ponticum, Lilium jankae, Lilium albanicum, Lilium polyphyllum, Lilium auratum, Lilium platyphyllum, Lilium brownii, Lilium japonicum, Lilium nobilissimum, Lilium rubellum, Lilium speciosum, Lilium davidii, Lilium duchartrei, Lilium henryi, Lilium lancifolium (Tiger Lily, Lilium lankongense, Lilium leichtlinii, Lilium papilliferum, Lilium rosthornii, Lilium amabile, Lilium callosum, Lilium cernuum, Lilium concolor, Lilium fargesii, Lilium pumilum, Lilium xanthellum, Lilium amoenum, Lilium bakerianum, Lilium henrici, Lilium lijiangense, Lilium lophophorum, Lilium mackliniae, Lilium nanum, Lilium nepalense, Lilium oxypetalum, Lilium paradoxum, Lilium primulinum, Lilium sempervivoideum, Lilium sherriffiae, Lilium souliei, Lilium stewartianum, Lilium taliense, Lilium wardii, Lilium arboricola, Lilium anhuiense, Lilium brevistylum, Lilium habaense, Lilium huidongense, Lilium jinfushanense, Lilium matangense, Lilium pinifolium, Lilium pyi, Lilium saccatum, Lilium tianschanicum, Lilium poilanei, Lilium floridum, Lilium medogense, Lilium leucanthum, Lilium puerense, Lilium regale, Lilium sargenticae, Lilium sulphureum, Lilium formosanum, Lilium longiflorum, Lilium philippinense, Lilium wallichianum, Lilium wenshanense, Lilium pensylvanicum, Lilium maculatum, Lilium eupetes;*
*Lycoris* spp., e.g. *Lycoris squamigera, Lycoris radiata;*
*Mircabilis* spp., e.g. *Mirabilis* 'Limelight', *Mirabilis* 'Red Glow';
*Muscari* spp., e.g. *Muscari armeniacum, Muscari azureum, Muscari armeniacum* 'Blue Spike', *Muscari botryites album, Muscari latifolium, Muscari* 'Valerie Finnis';
*Narcissus* spp., e.g. *Narcissus bulbocodium, Narcissus* 'Hawera', *Narcissus* 'Thalia', *Narcissus* 'Ambergate', *Narcissus* 'Broughshane', *Narcissus* 'Carlton', *Narcissus* 'Flower Record', *Narcissus* 'King Alfred', *Narcissus* 'Las Vegas', *Narcissus* 'Mon Cherie', *Narcissus* 'Mrs. R. O. Backhouse', *Narcissus* 'Pink Charm', *Narcissus* 'Pinza', *Narcissus* 'Precocious', *Narcissus* 'Red Aria', *Narcissus* 'Romance', *Narcissus* 'Sentinel', *Narcissus* 'W.P. Milner', *Narcissus* 'Salome', *Narcissus* 'Actaea', *Narcissus* 'Baby Moon', *Narcissus* 'Intrigue', *Narcissus* 'Pappy George', *Narcissus* 'Pipit', *Narcissus* 'Quail', *Narcissus* 'Suzy', *Narcissus* 'Cassata', *Narcissus* 'Parisienne', *Narcissus* 'Shrike', *Narcissus* 'Sorbet', *Narcissus* 'Sovereign', *Narcissus* 'Barrett Browning', *Narcissus* 'Merlin', *Narcissus* 'Queen of the North', *Narcissus* 'Segovia', *Narcissus* 'White Lady', *Narcissus* 'February Gold', *Narcissus* 'Itzim', *Narcissus* 'Jack Snipe', *Narcissus* 'Jetfire', *Narcissus* 'Peeping Tom', *Narcissus* 'Rapture', *Narcissus* 'Tete a Tete', *Narcissus* 'Wisley', *Narcissus canaliculatus, Narcissus* 'Geranium', *Narcissus* 'Golden Dawn', *Narcissus* 'Martinette', *Narcissus* 'Minnow', *Narcissus* 'Golden Ducat', *Narcissus* 'Mary Copeland', *Narcissus* 'Obdam', *Narcissus* 'Petit Four', *Narcissus* 'Rip van Winkle', *Narcissus* 'Tahiti', *Narcissus* 'White Lion', *Narcissus alcaracensis, Narcissus assoanus, Narcissus asturiensis, Narcissus bugei, Narcissus jonquilla, Narcissus longispathus, Narcissus papyrcaceus, Narcissus poeticus, Narcissus pseudonarcissus, Narcissus radinganorum, Narcissus romieuxii, Narcissus tazetta, Narcissus triandrus, Narcissus x medioluteus;*
*Oxalis* spp., e.g. *Oxalis tetraphylla* 'Iron Cross', *Oxalis vulcanicola* 'Molten Lava', *Oxalis regnellii var. triangularis, Oxalis oregana, Oxalis adenophylla, Oxalis vulcanicola* 'Zinfandel';
*Scilla sibirica;*
*Tulbaghia violacea;*
*Tulipa fosteriana* spp., e.g. *Tulipa fosteriana* 'Madame Lefeber', *Tulipa fosteriana* 'Orange Emperor', *Tulipa fosteriana* 'Purissima', *Tulipa fosteriana* 'Sweetheart';
*Tulipa greigii* spp., e.g. *Tulipa greigii* 'Cape Cod', *Tulipa gregii* 'Red Riding Hood', *Tulipa greigii* 'Rob Verlinden', *Tulipa greigii* 'Toronto';
*Tulipa* hybrids, e.g. *Tulipa* 'Antoinette', *Tulipa* 'Avignon', *Tulipa* 'Blushing Lady', *Tulipa* 'Dreamland', *Tulipa* 'Queen of the Night', *Tulipa* 'Zomerschoon';
*Tulipa kaufmanniana* selections, e.g. *Tulipa kaufmanniana* 'Heart's Delight', *Tulipa kaufmanniana* 'Love Song', *Tulipa kaufmanniana* 'Showwiner';
*Tulipa* spp., e.g. *Tulipa praestans* 'Fusilier', *Tulipa vvedenskyi* 'Henry Hudson', *Tulipa clusiana* 'Honky Tonk', *Tulipa clusiana* 'Lady Jane', *Tulipa bakeri* 'Lilac Wonder', *Tulipa humilis* 'Lilliput', *Tulipa clusiana* 'Peppermint Stick', *Tulipa pulchella* 'Persian Pearl', *Tulipa batalinii* 'Red Hunter', *Tulipa clusiana* 'Taco', *Tulipa clusiana* 'Tubergen's Gem', *Tulipa kolpakowskiana, Tulipa linifolia, Tulipa tarda, Tulipa turkestanica, Tulipa praestans* 'Unicum', *Tulipa humilis* 'Violacea', *Tulipa* 'Angelique', *Tulipa* 'Boule d'Or', *Tulipa* 'Crispion Sweet', *Tulipa* 'Miranda', *Tulipa* 'Montreux', *Tulipa* 'Mount Tacoma', *Tulipa* 'Orange Princess', *Tulipa* 'Peach Blossom', *Tulipa* 'Uncle Tom', *Tulipa* 'Yellow Spider', *Tulipa* 'Burgundy Lace', *Tulipa* 'Cummins', *Tulipa* 'Curly Sue', *Tulipa* 'Fancy Frills', *Tulipa* 'Fringed Elegance', *Tulipa* 'Hamilton', *Tulipa* 'Lambada', *Tulipa* 'Cardinal Rampolla', *Tulipa* 'Christmas Marvel', *Tulipa* 'Diana', *Tulipa* 'Keizerskroon', *Tulipa* 'Lac van Rijn', *Tulipa* 'Prince of Austria', *Tulipa* 'Van der Neer', *Tulipa* 'Purple Prince', *Tulipa* 'Black Parrot', *Tulipa* 'Estella Rijnveld', *Tulipa* 'Flaming Parrot', *Tulipa* 'Professor Rontgen', *Tulipa* 'Rococo', *Tulipa* 'Salmon Parrot', *Tulipa* 'Flaming Spring Green', *Tulipa* 'Red Spring Green', *Tulipa* 'Spring Green', *Tulipa* 'Yellow Spring Green', *Tulipa* 'Annie Schilder', *Tulipa* 'Calgary', *Tulipa* 'Carnaval de Rio', *Tulipa* 'Couleur Cardinal', *Tulipa* 'Cracker', *Tulipa* 'Gavota', *Tulipa* 'Ice Follies', *Tulipa* 'Ile de France', *Tulipa* 'Indian Summer', *Tulipa* 'Inzell', *Tulipa* 'Jan Reus', *Tulipa* 'Negrita', *Tulipa* 'Passionale', *Tulipa* 'Prinses Irene', *Tulipa* 'Purple Flag', *Tulipa* 'Ronaldo', *Tulipa* 'Shirley', *Tulipa* 'Strong Gold', *Tulipa* 'Zurel', *Tulipa* 'Ad Rem', *Tulipa* 'Apeldoorn Elite', *Tulipa* 'Burning Heart', *Tulipa* 'Garant', *Tulipa* 'Golden Apeldoorn', *Tulipa* 'Golden Parade', *Tulipa* 'Gudoshnik', *Tulipa* 'Ivory Floradale', *Tulipa* 'Marit', *Tulipa* 'Olympic Flame', *Tulipa* 'Pink Impression', *Tulipa* 'Silverstream', *Tulipa acuminata* (Homed Tulip), *Tulipa agenensis* (Eyed Tulip), *Tulipa aleppensis* (Aleppo Tulip), *Tulipa armena, Tulipa aucheriana, Tulipa batalinii, Tulipa bakeri, Tulipa biflora, Tulipa borszczowii, Tulipa botschantzevae* (Botschantzeva's tulip), *Tulipa butkovii, Tulipa carinata, Tulipa celsiana, Tulipa clusiana, Tulipa cretica, Tulipa cypria, Tulipa dasystemon, Tulipa didieri, Tulipa dubia, Tulipa edulis, Tulipa ferganica, Tulipa gesneriana, Tulipa goulimyi, Tulipa greigii, Tulipa grengiolensis, Tulipa heterophylla, Tulipa hoogiana, Tulipa humilis, Tulipa hungarica, Tulipa iliensis, Tulipa ingens, Tulipa julia, Tulipa kaufmanniana, Tulipa kolpakowskiana, Tulipa korolkowii* Regel, *Tulipa kurdica, Tulipa kuschkensis, Tulipa lanata, Tulipa latifolia, Tulipa lehmanniana, Tulipa linifolia, Tulipa marjolettii, Tulipa mauritania, Tulipa micheliana, Tulipa mongolica, Tulipa montana, Tulipa orphanidea, Tulipa ostrowskiana, Tulipa platystigma, Tulipa polychroma, Tulipa praecox, Tulipa praestans, Tulipa primulina, Tulipa pulchella, Tulipa retroflexa, Tulipa rhodopea, Tulipa saxatilis, Tulipa sharonensis, Tulipa splendens, Tulipa sprengeri* Baker, *Tulipa stapfii, Tulipa subpraestans, Tulipa sylvestris, Tulipa systola, Tulipa taihangshanica, Tulipa tarda, Tulipa tetraphylla, Tulipa tschimganica, Tulipa tubergeniana, Tulipa turkestanica, Tulipa undulatifolia, Tulipa urumiensis, Tulipa urumoffii, Tulipa violacea, Tulipa whittalli, Tulipa zenaidae;*
*Zantedeschia* spp., e.g. *Zantedeschia aethopica, Zantedeschia albomcaculata, Zantedeschia* 'Flame', *Zantedeschia* 'Edge of Night', *Zantedeschia* 'Sunshine';
*Zephyranthes candidaK;*
*Amaryllis* spp., e.g. *Amaryllis belladonna, Amaryllis parcadisicola;*
*Hippeastrum* spp., e.g. *Hippeastrum aglaiae, Hippeastrum ambiguum, Hippeastrum andreanum, Hippeastrum argentinum, Hippeastrum aulicum, Hippeastrum blossfeldiae, Hippeastrum blumenavium, Hippeastrum bukasovii, Hippeastrum breviflorum, Hippeastrum calyptratum, Hippeastrum candidum, Hippecastrum cybister, Hippeastrum doraniae, Hippeastrum elegans, Hippeastrum evansiae, Hippeastrum forgetii, Hippeastrum gayanum, Hippeastrum goianum, Hippeastrum lapacense, Hippeastrum leopoldii, Hippeastrum machupijchense, Hippeastrum maracasum, Hippeastrum oconequense, Hippeastrum organense, Hippeastrum papilio, Hippeastrum pardinum, Hippeastrum petiolatum, Hippeastrum psittacinum, Hippeastrum puniceum, Hippeastrum reginae, Hippeastrum reticulatum, Hippeastrum solandriferum, Hippeastrum striatum, Hippeastrum stylosum, Hippeastrum traubii, Hippeastrum vittatum, Hippeastrum ugentii*;
*Iris* spp., e.g *Iris xiphium* var. *lusitanica, Iris boissieri* Henriq, *Iris filifolia* Boiss., *Iris juncea* Poir., *Iris latifolia, Iris serotina* Willk. in Willk. & Lange, *Iris tingitana* Boiss. & Reut, *Iris xiphium, Iris collettii* Hook., *Iris decora* Wall., *Iris albomarginata* R.C.Foster, *Iris aucheri* (Baker) Sealy (including I. sindjarensis), *Iris bucharica* Foster, *Iris cauccasica* Hoffm., *Iris cycloglossa* Wendelbo, *Iris fosteriana* Aitch. & Baker, *Iris graeberiana* Tubergen ex Sealy, *Iris magnifica* Vved., *Iris narynensis* O.Fedtsch., *Iris nusairiensis* Monterode, *Iris palaestina* (Bak.) Boiss., *Iris persica L., Iris planifolia* (Mill.) Fiori & Paol., *Iris pseudocaucasica* Grossh., *Iris regis-uzziae* Feinbrun, *Iris rosenbachiana* Reg., *Iris vicaria* Vved., *Iris bakeriana* Foster, *Iris danfordiae* (Baker) Boiss., *Iris histrio* Rchb.f., *Iris histrioides* (G.F.Wilson) S.Arn., *Iris kolpakowskiana* Regel, *Iris pamphylica* Hedge, *Iris reticulata* Bieb., *Iris vartanii* Fost., *Iris winogradowii.*

Preferred are bulbs of Allium, lily, tulip, crocus, anemone, cyclamen, hyacinth, amaryllis, Hippeastrum, Narcissus and Iris.

In a preferred embodiment, bulbs of plant species and plant varieties, which grow wild or which are obtained by traditional biological breeding methods such as hybridization or protoplast fusion are treated. In a further preferred embodiment, bulbs of transgenic plants and plant varieties which have been obtained by recombinant methods, if appropriate in combination with traditional methods (genetically modified organisms), are treated. Bulbs of plants of the plant varieties which are in each case commercially available or in use are especially preferably treated in accordance with the invention. Bulbs of plant varieties are understood as meaning plants with novel traits which have been bred both by traditional breeding, by mutagenesis or by recombinant DNA techniques. They may take the form of varieties, races, biotypes and genotypes.

The method of treatment according to the invention can be used in the treatment of bulbs of genetically modified organisms (GMOs). Genetically modified plants (or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example antisense technology, cosuppression technology or RNA interference - RNAi - technology). A heterologous gene that is located in the genome is also called a transgene. A transgene that is defined by its particular location in the plant genome is called a transformation or transgenic event.

At certain application rates, the active substance combinations according to the invention may also have a strengthening effect in plants when applied to the bulbs. Accordingly, they are suitable for mobilizing the defense system of the plant against attack by unwanted phytopathogenic fungi and/or microorganisms and/or viruses. This may, if appropriate, be one of the reasons for the enhanced activity of the combinations according to the invention, for example against fungi. Plant-strengthening (resistance-inducing) substances are to be understood as meaning, in the present context, those substances or combinations of substances which are capable of stimulating the defense system of plants in such a way that, when subsequently inoculated with unwanted phytopathogenic fungi, the treated plants display a substantial degree of resistance to these unwanted phytopathogenic fungi. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active substances.

Bulbs of plants and plant varieties which are preferably to be treated according to the invention include all plants which have genetic material which imparts particularly advantageous, useful traits to these plants (whether obtained by breeding and/or biotechnological means).

Bulbs of plants and plant varieties which are also preferably to be treated according to the invention are resistant against one or more biotic stresses, i.e. said plants have a better defense against animal and microbial pests, such as against nematodes, insects, mites, phytopathogenic fungi, bacteria, viruses and/or viroids.

Bulbs of plants and plant varieties which may also be treated according to the invention are those which are resistant to one or more abiotic stresses. Abiotic stress conditions may include, for example, drought, cold temperature exposure, heat exposure, osmotic stress, waterlogging, increased soil salinity, increased exposure to minerals, exposure to ozone, exposure to strong light, limited availability of nitrogen nutrients, limited availability of phosphorus nutrients or shade avoidance.

Bulbs of plants and plant varieties which may also be treated according to the invention are those characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including early flowering, flowering control for hybrid seed production, seedling vigour, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Bulbs of plants that may be treated according to the invention are hybrid plants that already express the characteristics of heterosis, or hybrid vigour, which results in generally higher yield, vigour, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in corn) be produced by detasseling (i.e. the mechanical removal of the male reproductive organs or male flowers) but, more typically, male sterility is the result of genetic determinants in the plant genome. In that case, and especially when seed is the desired product to be harvested from the hybrid plants, it is typically useful to ensure that male fertility in the hybrid plants, which contain the genetic determinants responsible for male sterility, is fully restored. This can be accomplished by ensuring that the male parents have appropriate fertility restorer genes which are capable of restoring the male fertility in hybrid plants that contain the genetic determinants responsible for male sterility. Genetic determinants for male sterility may be located in the cytoplasm. Examples of cytoplasmic male sterility (CMS) were for instance described in Brassica species. However, genetic determinants for male sterility can also be located in the nuclear genome. Male sterile plants can also be obtained by plant biotechnology methods such as genetic engineering. A particularly useful means of obtaining male sterile plants is described in WO 89/10396 in which, for example, a ribonuclease such as barnase is selectively expressed in the tapetum cells in the stamens. Fertility can then be restored by expression in the tapetum cells of a ribonuclease inhibitor such as barstar.

Bulbs of plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Bulbs of plants or plant varieties (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

Some pathogens of fungal diseases of bulbs which can be treated according to the invention may be mentioned, by way of example, but not by way of limitation:
*Botrytis spp.* (e.g. *B. cinerea, B. elliptica, B. tulipae, B. allii, B. climates), Penicillium spp.* (e.g. blue mold), *Sclerotinia spp.* (e.g. *S. draytoni, S. gladioli), Fusarium spp.* (e.g. *F. oxysporum, F. oxysporum f.sp. tulipae, F. oxysporum var lilii, F. solani, F. tulipae), Rhizoctonia solani, Stagonospora narcissi, Pythium spp.* (e.g. *P. ultimum), Phytophthora capsici, Peronospora spp. Sclerotium spp.* (e.g. S. *rolfsii, S. tuliparum), Cercosporella spp., Stagnospora spp.* (e.g. S. *curtisi), Rhizopus spp.* (e.g *R. stolonifera), Rythium spp.* (e.g. *R. debaryanum), Asterinella spp.* (e.g. A. *hippeastri), Cercospora spp.* (e.g. *C. amaryllidis), Accidium spp.* (e.g. A. *amaryllidis), Septogloeum spp.* (e.g S. *amaryllidis*).

When employing the active substances according to the invention as fungicides, the application rates may vary within a substantial range, depending on the type of application. The application rate of the active substances according to the invention is
• when treating plant parts, for example leaves: from 0.1 to 10 000 g/ha, preferably from 10 to 1000 g/ha, particularly preferably from 50 to 300 g/ha (when the application is carried out by watering or dropwise, it may even be possible to reduce the application rate, in particular when inert substrates such as rock wool or perlite are used);
● when treating seed: from 2 to 200 g per 100 kg of seed, preferably from 3 to 150 g per 100 kg of seed, especially preferably from 2.5 to 25 g per 100 kg of seed, very especially preferably from 2.5 to 12.5 g per 100 kg of seed;
● when treating the soil: from 0.1 to 10 000 g/ha, preferably from 1 to 5000 g/ha.

These application rates are mentioned only by way of example and not by way of limitation in the sense of the invention.

The active substances or compositions according to the invention can thus be employed for protecting plants for a certain period of time after treatment against attack by the pathogens mentioned. The period for which protection is provided extends generally for 1 to 28 days, preferably 1 to 14 days, particularly preferably 1 to 10 days, very particularly preferably 1 to 7 days after the treatment of the plants with the active substances, or up to 200 days after the treatment of seed.

## Claims

1. Use of dithiine-tetracarboximides of the general formula (I) 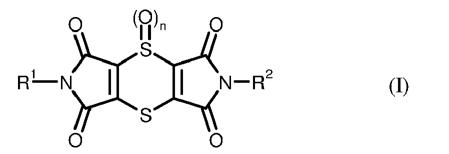 in which
R¹ and R² are identical or different and represent hydrogen, C₁-C₈-alkyl which is optionally monosubstituted or polysubstituted by halogen, -OR³, -COR⁴, or represent C₃-C₇-cycloalkyl which are optionally monosubstituted or polysubstituted by halogen, C₁-C₄-alkyl or C₁-C₄-haloalkyl, or represent aryl or aryl-(C₁-C₄-alkyl), each of which is optionally monosubstituted or polysubstituted by halogen, C₁-C₄-alkyl, C₁-C₄-haloalkyl, -COR⁴ or sulphonylamino,
R³ represents hydrogen, C₁-C₄-alkyl, C₁-C₄-alkylcarbonyl, or represents aryl which is optionally monosubstituted or polysubstituted by halogen, C₁-C₄-alkyl or C₁-C₄-haloalkyl,
R⁴ represents hydroxyl, C₁-C₄-alkyl or C₁-C₄-alkoxy,
n represents 0 or 1
for controlling phytopathogenic fungi on bulbs.

2. Use according to Claim 1, **characterized in that**
R¹ and R² are identical or different and represent hydrogen, or represent C₁-C₆-alkyl which is optionally monosubstituted or polysubstituted by fluorine, chlorine, bromine, -OR³, -COR⁴, or represent C₃-C₇-cycloalkyl which is optionally monosubstituted or polysubstituted by chlorine, methyl or trifluoromethyl, or represent phenyl or phenyl-(C₁-C₄-alkyl), each of which is optionally monosubstituted or polysubstituted by fluorine, chlorine, bromine, methyl, trifluoromethyl, -COR⁴, sulphonylamino,
R³ represents hydrogen, methyl, ethyl, methylcarbonyl, ethylcarbonyl or represents phenyl which is optionally monosubstituted or polysubstituted by fluorine, chlorine, methyl, ethyl, n-propyl, isopropyl or trifluoromethyl,
R⁴ represents hydroxyl, methyl, ethyl, methoxy or ethoxy,
n represents 0 or 1.

3. Use according to Claim 1, **characterized in that**
R¹ and R² are identical or different and represent hydrogen, or represent C₁-C₄-alkyl which is optionally monosubstituted or polysubstituted by fluorine, chlorine, hydroxyl, methoxy, ethoxy, methylcarbonyloxy, carboxyl, or represent C₃-C₇-cycloalkyl which is optionally monosubstituted or polysubstituted by chlorine, methyl or trifluoromethyl, or represent phenyl, benzyl, 1-phenethyl, 2-phenethyl or 2-methyl-2-phenethyl, each of which is op- tionally monosubstituted to trisubstituted by fluorine, chlorine, bromine, methyl, trifluoromethyl, -COR⁴, sulphonylamino,
R³ represents hydrogen, methyl, methylcarbonyl or phenyl,
R⁴ represents hydroxyl or methoxy,
n represents 0 or 1.

4. Use according to Claim 1, **characterized in that** R¹ and R² simultaneously represent methyl.

5. Use according to Claim 1, 2, 3 or 4, **characterized in that** bulbs are treated of plants selected from the group consisting of *Allium* spp., *Aloccasia* spp., *Alstroemeria* spp., *Anemone* spp., *Arisaema* spp., *Begonia* x tuberhybrida, *Belamcanda chinensis, Bletilla striata, Caladium* spp., *Camassia* spp., *Canna* spp., *Chionodoxa* spp., *Colchicum* spp., *Colocasia* spp., *Convallaria majus, Corydalis* spp., *Crinum* spp., *Crocosmia* spp., *Crocus* spp., *Dahlia* spp., *Dietes iridioides, Eranthis hyemalis, Erythronium* spp., *Eucomis* spp., *Freesia* spp., *Fritillaria* spp., *Galanthus* spp., *Gladiolus* spp., *Gloriosa superba, Hippeastrum* hybrids, *Hyacinthoides hispanica, Hyacinthus* spp., *Leucojum aestivum, Lilium* spp., *Lycoris* spp., *Mirabilis* spp., *Muscari* spp., *Narcissus* spp., *Oxalis* spp., *Scilla sibirica, Tulbaghia violacea, Tulipa fosteriana* spp., *Tulipa greigii* spp., *Tulipa* hybrids, *Tulipa kaufmanniana* selections, *Tulipa* spp., *Zantedeschia* spp., *Zephyranthes candida, Amaryllis* spp., *Hippeastrum* spp., *Iris* spp.

6. Use according to Claim 1, 2, 3, 4 or 5, **characterized in that** bulbs are treated by dipping, spraying, showering, dust application and soil treatment, e.g. by in-furrow application at the time of sowing.

7. Method of controlling phytopathogenic fungi on (flower) bulbs, **characterized in that** dithiine-tetracarboximides of the formula (I) according to Claim 1 are applied to the bulbs.

8. Method according to Claim 7, **characterized in that** dithiine-tetracarboximides of the formula (I) according to Claim 2 are applied to the bulbs.

9. Method according to Claim 7, **characterized in that** dithiine-tetracarboximides of the formula (I) according to Claim 3 are applied to the bulbs.

10. Method according to Claim 7, **characterized in that** dithiine-tetracarboximides of the formula (I) according to Claim 4 are applied to the bulbs.

11. Method according to Claim 7, 8, 9 or 10, **characterized in that** bulbs are treated of plants selected from the group consisting of *Allium* spp., *Alocasia* spp., *Alstroemeria* spp., *Anemone* spp., *Arisaema* spp., *Begonia* x tuberhybrida, *Belamcanda chinensis, Bletilla striata, Caladium* spp., *Camassia* spp., *Canna* spp., *Chionodoxa* spp., *Colchicum* spp., *Colocasia* spp., *Convallaria majus, Corydalis* spp., *Crinum* spp., *Crocosmia* spp., *Crocus* spp., *Dahlia* spp., *Dietes iridioides, Eranthis hyemalis, Erythronium* spp., *Eucomis* spp., *Freesia* spp., *Fritillaria* spp., *Galanthus* spp., *Gladiolus* spp., *Gloriosa superba, Hippeastrum* hybrids, *Hyacinthoides hispanica, Hyacinthus* spp., *Leucojum aestivum, Lilium* spp., *Lycoris* spp., *Mirabilis* spp., *Muscari* spp., *Narcissus* spp., *Oxalis* spp., *Scilla sibirica, Tulbaghia violacea, Tulipa fosteriana* spp., *Tulipa greigii* spp., *Tulipa* hybrids, *Tulipa kaufmanniana* selections, *Tulipa* spp., *Zantedeschia* spp., *Zephyranthes candida, Amaryllis* spp., *Hippeastrum* spp., *Iris* spp.

12. Method according to Claim 7, 8, 9, 10 or 11, **characterized in that** bulbs are treated by dipping, spraying, showering, dust application and soil treatment, e.g. by in-furrow application at the time of sowing.
